# FASCICULE DE BREVET EUROPEEN

(11) **EP 4 101 722 B1**
(45) Date de publication et mention de la délivrance du brevet: **08.11.2023**
(21) Numéro de dépôt: 22177862.4
(22) Date de dépôt: 08.06.2022
(51) Int. Cl.: B61D 33/00, B60N 2/24

(54) **VÉHICULE DE TRANSPORT DE PASSAGERS AVEC NOMBRE DE PLACES ASSISES VARIABLE**
FAHRZEUG ZUR PERSONENBEFÖRDERUNG MIT EINER VARIABLEN ANZAHL VON SITZPLÄTZEN
PASSENGER TRANSPORT VEHICLE WITH VARIABLE NUMBER OF SEATS

(30) Priorité: 09.06.2021 FR 2106065
(43) Date de publication de la demande: 14.12.2022
(73) Titulaire: ALSTOM Holdings, 93400 Saint-Ouen-sur-Seine (FR)
(72) Inventeur: KONIECZKA, Jérôme, 62000 DAINVILLE (FR); STOCKER, Quentin, Marcel, Daniel, 92400 COURBEVOIE (FR); ECOUE, Adrien, 92130 ISSY LES MOULINEAUX (FR)
(74) Mandataire: Lavoix

(56) Documents cités:
- CN-A- 110 356 296
- CN-A- 112 824 205
- CN-Y- 201 183 490
- US-A- 1 170 343
- US-A- 1 412 367

## Description

La présente invention concerne en général un véhicule de transport de passagers, et en particulier un véhicule de transport de passagers équipé avec un système de gestion de l'espace à l'intérieur du véhicule qui permet d'adapter l'espace disponible entre les passagers assis et les passagers debout en fonction des conditions effectives de service, et spécialement de la densité ou de la quantité des passagers transportés pendant les différents moments du service.

Il est bien connu que les moyens de transport de passagers, comme par exemple les trains, les métropolitains et les bus, sont de plus en plus utilisés dans le monde entier. Un dispositif est présenté dans le document CN201183490Y.

En conséquence, en particulier dans certaines zones, comme par exemple dans les grands centres urbains, les véhicules ou les convois utilisés sont très congestionnés pour au moins une certaine partie de leur service, et spécialement pendant les heures de pointe.

Puisque les véhicules aujourd'hui utilisés ont une capacité prédéterminée et une configuration de leur espace intérieur généralement prédéfinie, le résultat est que le confort à bord du véhicule n'est pas optimal, ni pendant les heures de pointe ni pendant les heures creuses.

En effet, le nombre de places assises disponibles et leur positionnement est généralement prédéfini et pendant les heures de pointe la plupart des passagers doit donc rester debout ; par contre, pendant les heures creuses, il est également possible que des passagers restent debout, même s'il y a beaucoup d'espace disponible à l'intérieur du véhicule.

Par conséquent, un but principal de la présente invention est de fournir une solution offrant des améliorations par rapport à l'état de l'art connu, et spécialement de réaliser des véhicules de transport de passagers où l'exploitation de l'espace à l'intérieur du véhicule peut être optimisé en fonction des conditions d'utilisation différentes pendant l'horaire de service, en particulier en fonction du trafic passagers.

Ce but est atteint par un véhicule de transport de passagers, selon la revendication 1.

Selon des aspects avantageux mais non obligatoires de l'invention, un tel véhicule de transport de passagers peut incorporer une ou plusieurs des caractéristiques suivantes, prises selon toute combinaison techniquement admissible :
- la structure mécanique de support est configurée pour former au moins un appui ischiatique pour les passagers lorsque la partie mobile est dans la seconde position ;
- la structure mécanique de support comporte au moins une première barre longitudinale qui est installée de manière fixe à l'intérieur du véhicule, une deuxième barre longitudinale ayant une première d'extrémité reliée à la première barre longitudinale à proximité d'une première extrémité de la première barre longitudinale, et une troisième barre longitudinale ayant une première extrémité reliée de manière coulissante à la première barre longitudinale, et des premiers moyens de connexion configurés pour relier une deuxième extrémité de la deuxième barre longitudinale à une deuxième extrémité de la troisième barre longitudinale, de manière mobile l'une par rapporte à l'autre ;
- la structure mécanique de support comporte une pluralité de premières barres longitudinales qui sont installées de manière fixe à l'intérieur du véhicule à distance les unes des autres et alignées le long d'un axe transversal, une pluralité de deuxièmes barres longitudinales, chaque deuxième barre longitudinale ayant sa première extrémité reliée à une première barre longitudinale correspondante, à proximité d'une première extrémité de cette première barre longitudinale correspondante, et une pluralité de troisièmes barres longitudinales, chaque troisième barre longitudinale ayant une première extrémité reliée de manière coulissante à une première barre longitudinale correspondante, et une pluralité de premiers moyens de connexion, chaque premier moyen de connexion étant configuré pour relier une deuxième extrémité d'une deuxième barre longitudinale à une deuxième extrémité d'une troisième barre longitudinale correspondante, de manière mobile l'une par rapporte à l'autre ;
- le ou chaque premier moyen de connexion comporte une articulation qui est reliée à la deuxième extrémité de la deuxième barre longitudinale correspondante et à la deuxième extrémité de la troisième barre longitudinale correspondante ;
- la structure mécanique de support comporte des deuxièmes moyens de connexion configurés pour relier la deuxième extrémité de la ou de chaque deuxième barre longitudinale à la ou chaque première barre longitudinale correspondante, de manière que cette deuxième extrémité est fixe le long de la première barre longitudinale correspondante alors que la ou chaque deuxième barre longitudinale peut basculer par rapport à la première barre longitudinale correspondante ;
- chaque deuxième moyen de connexion comporte une articulation qui est reliée à la deuxième extrémité de la deuxième barre longitudinale correspondante et à la première barre longitudinale correspondante ;
- la structure mécanique de support comporte des troisièmes moyens de connexion configurés pour relier la deuxième extrémité de la ou chaque troisième barre longitudinale à la ou à chaque première barre longitudinale correspondante, la ou chaque troisième barre longitudinale étant mobile par rapport à la ou chaque première barre longitudinale correspondante ;
- chaque troisième moyen de connexion comporte une articulation qui est reliée à la deuxième extrémité de la troisième barre longitudinale correspondante et à la première barre longitudinale correspondante ;
- la structure mécanique de support comprend en outre au moins une quatrième barre longitudinale configurée pour relier deux premiers moyens de connexion placés l'un à la suite de l'autre le long de l'axe transversal ;
- la structure mécanique de support comprend une pluralité de quatrièmes barres longitudinales, chaque quatrième barre longitudinale étant configurée pour relier deux premiers moyens de connexions placés l'un à la suite de l'autre le long le long de l'axe transversal ;
- la structure mécanique de support comporte en outre au moins une cinquième barre longitudinale et des quatrièmes moyens de connexion qui sont configurés pour relier une première extrémité de la cinquième barre longitudinale à la première barre longitudinale, à proximité de la deuxième extrémité de cette première barre longitudinale, un espace libre étant formé entre la cinquième barre longitudinale et la première barre longitudinale pour accueillir au moins une portion de la partie mobile lorsque la partie mobile est dans la seconde position ;
- la structure mécanique de support comporte au moins deux cinquièmes barres longitudinales et les quatrièmes moyens de connexion sont configurés pour relier la première extrémité de chaque cinquième barre longitudinale à une première barre longitudinale correspondante, à proximité de la deuxième extrémité de cette première barre longitudinale correspondante, un espace libre étant formé entre les cinquièmes barres longitudinales et les première barres longitudinales correspondantes pour accueillir au moins une portion de la partie mobile lorsque que la partie mobile est dans la seconde position ;
- les quatrièmes moyens de connexion sont configurés pour permettre une rotation de chaque cinquième barre longitudinale autour de l'axe transversal par rapport à la première barre longitudinale correspondante ;
- chaque quatrième moyen de connexion comporte une articulation reliée à la première extrémité de la cinquième barre longitudinale correspondante et à la première barre longitudinale correspondante ;
- chaque cinquième barre longitudinale est agencée avec une deuxième extrémité, qui est prévue en appui sur un corps de la troisième barre longitudinale correspondante lorsque la partie mobile est dans la première position, et qui est prévue pour glisser sur le corps de et relativement à la troisième barre longitudinale correspondante lorsque la partie mobile est déplacée entre la première position et la seconde position ;
- la structure mécanique de support comporte une surface de revêtement additionnelle qui est disposée sur et est reliée à deux des cinquièmes barres longitudinales, la surface de revêtement additionnelle étant configurée pour former au moins un dossier pour les passagers ;
- le système de gestion comporte en outre un dispositif de commande installé à bord du véhicule et configuré pour fournir au moins un signal de commande à distance pour activer, de préférence substantiellement en temps réel, le déplacement de la partie mobile par rapport à la partie fixe ;
- le système de gestion comporte des moyens d'actionnement qui sont configurés pour déplacer l'au moins une partie mobile entre la première position et la seconde position en fonction d'un signal de command émis à distance par le dispositif de commande ;
- les moyens d'actionnement comportent au moins un moteur commandé à distance ;
- l'au moins un moteur commandé à distance est un moteur linéaire monté coulissant sur la première barre longitudinale, en étant substantiellement solidaire avec la troisième barre longitudinale correspondante.

D'autres aspects et avantages de l'invention apparaîtront à la lecture de la description qui suit, donnée uniquement à titre d'exemple et faite en référence aux dessins annexés, parmi lesquels :
[FIG. 1] la Figure 1 est une vue illustrant schématiquement l'intérieur d'un véhicule de transport de passagers selon l'invention, ayant une structure mécanique de support dans une première configuration qui peut être utilisée pendant une condition de trafic passagers fluide ;
[FIG. 2] la Figure 2 est une vue illustrant schématiquement la structure mécanique de support illustrée sur la figure 1 dans une deuxième configuration qui peut être utilisée pendant une condition de trafic passagers plus dense ;
[FIG. 3] la Figure 3 est une vue représentant schématiquement des composants utilisés dans le véhicule de transport de passagers selon l'invention, selon un premier exemple de réalisation ;
[FIG. 4] la Figure 4 est une vue représentant schématiquement une possible forme de réalisation de certains moyens de connexion utilisés dans le véhicule de transport de passagers selon l'invention ;
[FIG. 5] la Figure 5 est une vue représentant schématiquement des composants de la structure mécanique de support utilisée dans le véhicule selon l'invention, dans une première configuration formant au moins une place assise disponible pour les passagers ;
[FIG. 6] la Figure 6 est une vue représentant schématiquement la structure mécanique de support utilisée dans le véhicule selon l'invention, dans une deuxième configuration formant un appui ischiatique pour les passagers ;
[FIG. 7] la Figure 7 est une vue latérale qui illustre schématiquement une deuxième forme de réalisation de certains composants de la structure mécanique de support utilisée dans le véhicule selon l'invention, dans une première position formant au moins une place assise disponible pour les passagers ;
[FIG. 8] la Figure 8 est une vue latérale qui représente schématiquement les composants de la structure mécanique illustrés sur la figure 7, dans une position intermédiaire ;
[FIG. 9] la Figure 9 est une vue latérale qui représente schématiquement les composants de la structure mécanique illustrés sur les figures 7 et 8, dans une deuxième position formant un appui ischiatique pour les passagers ;
[FIG. 10] la Figure 10 est une vue en perspective représentant les composants de la structure mécanique de support illustrés sur la figure 7 dans la première position ;
[FIG. 11] la Figure 11 est une vue en perspective représentant les composants de la structure mécanique de support illustrés sur la figure 9 dans la deuxième position.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" est utilisé ici en se référant à tout composant dans son ensemble, ou à toute partie d'un composant, ou à une combinaison de composants, il doit être compris que cela signifie et englobe la structure et/ou la configuration et/ou la forme et/ou le positionnement du composant ou de la partie que ce terme désigne.

En particulier, par rapport à des moyens/modules électroniques et/ou logiciels, chacun des termes indiqués ci-dessus englobe les circuits électroniques, ainsi que des codes logiciels et/ou des algorithmes ou des programmes complets stockés ou en cours d'exécution.

En outre, lorsque les termes "substantiellement" ou "sensiblement" sont utilisés ici, ils doivent être compris comme englobant une possible variation de plus ou moins 5% par rapport à une valeur ou une position de référence indiquée ; de plus, lorsque les termes transversal ou transversalement sont utilisés ici, ils doivent être compris comme englobant une direction non parallèle à la ou aux pièces ou direction (s) / axe de référence auxquelles ils se réfèrent, et la perpendicularité doit être considérée comme un cas spécifique de direction transversale.

Enfin, dans tout le présent document, les nombres ordinaux premier, deuxième, troisième, etc. sont utilisés par souci de clarté et ils ne doivent en aucun cas être compris comme limitatif. En particulier, le fait qu'un composant soit dénommé comme étant, par exemple, le « quatrième composant » n'implique pas nécessairement la présence de composants précédents que seraient un « premier composant » ou un « deuxième composant » ou un « troisième composant», à moins que cette présence ne soit clairement évidente et nécessaire pour le fonctionnement d'un mode ou des modes de réalisation décrits, ni que l'ordre doit être exactement celui considéré dans la séquence numérique décrite en référence au(x) mode(s) de réalisation illustré(s).

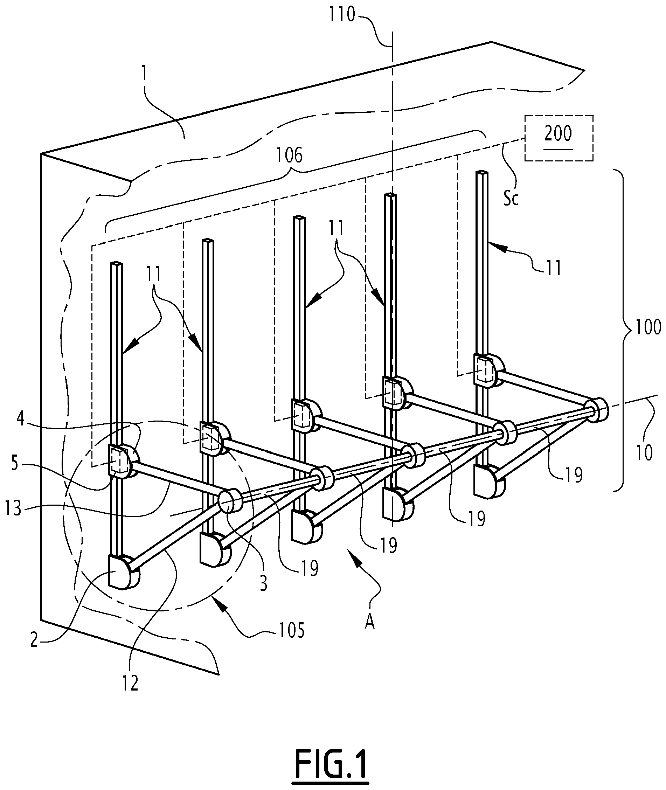

La figure 1 illustre schématiquement l'intérieur d'un véhicule de transport de passagers selon la présente invention, désigné avec le numéro de référence 1. La définition de « véhicule de transport de passagers » utilisée ici doit être interprétée dans le sens le plus large possible, c'est-à-dire comme incluant tout type de véhicule de transport de passagers, et cette définition peut être considérée donc comme couvrant également des véhicules ferroviaires, par exemple les trams, les trains de surface, et similaires.

Le véhicule 1 selon la présente invention comporte un système de gestion de l'espace à l'intérieur du véhicule 1, qui est configuré pour modifier la configuration de cet espace destiné à accueillir les passagers, et en particulier pour modifier le nombre des places assises disponibles en fonction de la densité effective des passagers à transporter, c'est à dire du niveau de trafic de passagers à transporter.

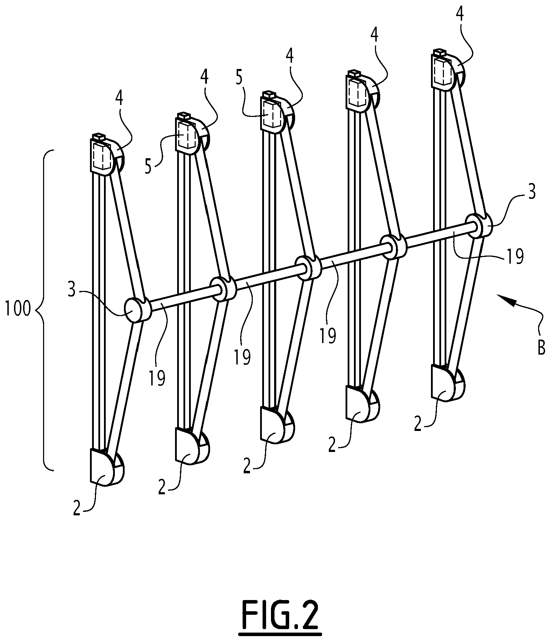

En particulier, le système de gestion utilisée comporte au moins une structure de support, indiquée globalement avec le nombre de référence 100 sur les figures 1 et 2, ayant une partie fixe 106 et une partie mobile 105 qui est déplaçable, par rapport à la partie fixe 106, entre une première position, indiquée sur la figure 1 par la lettre A, dans laquelle la partie mobile 105 est déployée vis-à-vis de la partie fixe 106 de manière que la structure mécanique de support 100 forme globalement au moins une place assise disponible pour les passagers, et une seconde position, indiquée sur la figure 2 par la lettre B, dans laquelle la partie mobile 105 est rétractée vers la partie fixe 106 de façon que l'au moins une place assise est indisponible pour l'assise en augmentant l'espace disponible à l'intérieur du véhicule pour les passagers debout.

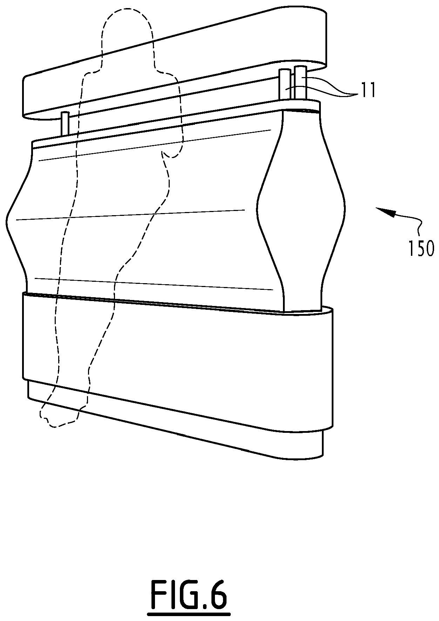

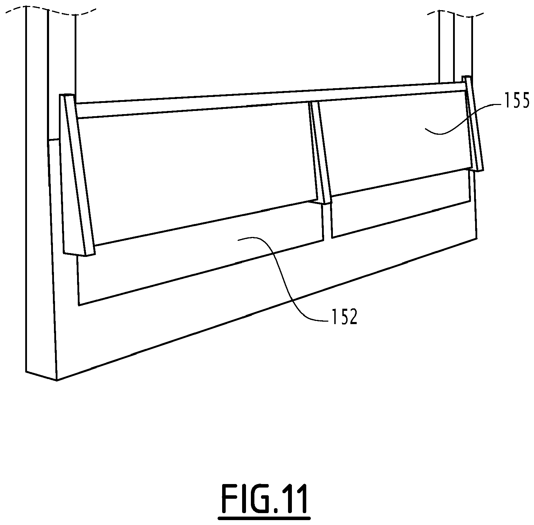

Selon l'invention comme illustrée sur les figures 6 et 11, la structure mécanique de support 100 est configurée pour former au moins un appui ischiatique pour les passagers lorsque la partie mobile 105 est dans la seconde position.

Selon l'invention, la structure mécanique de support 100 comporte au moins une surface de revêtement, indiquée sur la figure 6 par la référence 150 qui est reliée à et est disposée autour d'au moins une portion de la partie mobile 105. En particulier, la surface de revêtement 150 et la partie mobile 105 sont substantiellement solidaires l'une à l'autre et se déplacent ensemble lorsque la partie mobile 105 est déplacée par rapport à la partie fixe 106.

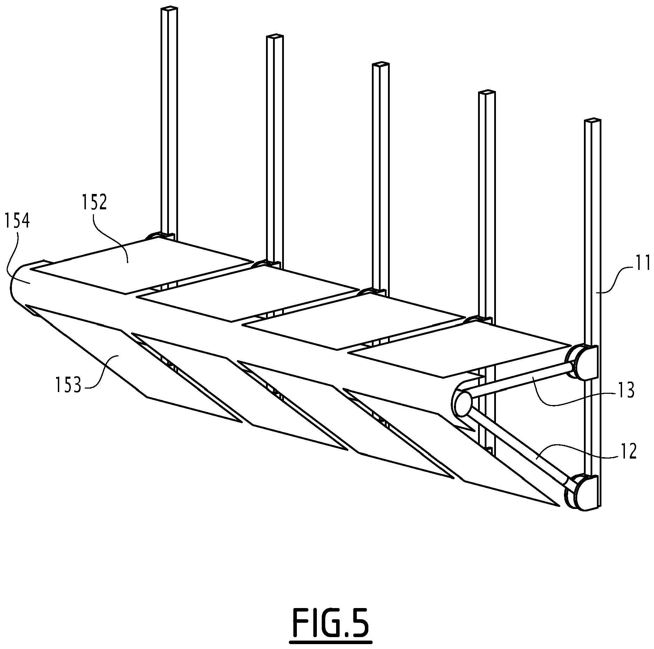

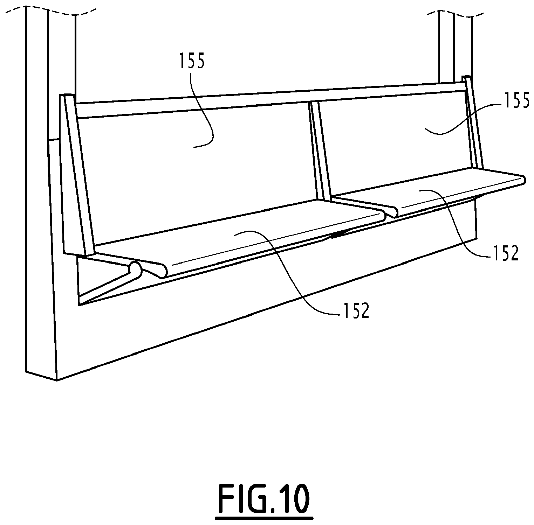

Comme illustré sur les figures 5 et 10, la ou chaque surface de revêtement 150 comporte au moins une première portion substantiellement rigide 152 formant une surface assise lorsque la partie mobile 105 est dans la première position A.

Selon l'invention illustrée sur la figure 5, la surface de revêtement 150 comporte une deuxième portion substantiellement rigide 153, et une troisième portion déformable 154 qui est disposée entre les première et deuxième portions substantiellement rigides 152 et 153 et qui est reliée à la première portion substantiellement rigide 152 et à la deuxième portion substantiellement rigide 153 de façon que les première et deuxième portions substantiellement rigides forment avec la troisième portion déformable 154 une surface d'appui ischiatique lorsque la partie mobile 105 est dans la seconde position B.

Selon une variante de réalisation possible, comme illustré sur les figures 10 et 11, la structure mécanique de support 100 comporte une surface de revêtement additionnelle, indiqué par la référence 155, qui est séparée de la portion rigide 152 formant une surface assise lorsque la partie mobile 105 est dans la première position A. En particulier, la surface de revêtement additionnelle 155 est reliée à au moins deux cinquièmes barres longitudinales 16, et est configurée pour former au moins un dossier pour les passagers.

Selon une forme de réalisation possible, illustrée sur les figures 1 à 5, la structure mécanique de support 100 comporte au moins :
- une première barre longitudinale 11 qui est installée de manière fixe à l'intérieur du véhicule 1 ;
- une deuxième barre longitudinale 12 ayant une première extrémité 22 reliée à la première barre longitudinale 11, à proximité d'une première extrémité 21 de la première barre longitudinale 11 ; et
- une troisième barre longitudinale 13 ayant une première extrémité 33 reliée de manière coulissante à la première barre longitudinale 11 ; et
- des premiers moyens de connexion 3 configurés pour relier une deuxième extrémité 32 de la deuxième barre longitudinale 12 à une deuxième extrémité 23 de la troisième barre longitudinale 13 de manière articulée l'une par rapport à l'autre.

En particulier, selon une possible forme de réalisation, la structure mécanique de support 100 illustrée sur les figures 1 à 5, comporte:
- une pluralité de premières barres longitudinales 11 qui sont installées de manière fixe à l'intérieur du véhicule 1 à distance les unes des autres et alignées le long d'un axe transversal 10 ;
- une pluralité de deuxièmes barres longitudinales 12, chaque deuxième barre longitudinale 12 ayant sa première extrémité 22 reliée à une première barre longitudinale 11 correspondante, à proximité d'une première extrémité 21 de cette première barre longitudinale 11 correspondante; et
- une pluralité de troisièmes barres longitudinales 13, chaque troisième barre longitudinale ayant une première extrémité 33 reliée de manière coulissante à une première barre longitudinale 11 correspondante ; et
- une pluralité de premiers moyens de connexion 3, chaque premier moyen de connexion 3 étant configuré pour relier une deuxième extrémité 32 d'une deuxième barre longitudinale 12 à une deuxième extrémité 23 d'une troisième barre longitudinale 13 correspondante, de manière articulée l'une par rapporte à l'autre.

Le terme longitudinal doit être ici compris comme indiquant un corps ayant une dimension mesurée selon une direction, par exemple pour la première barre 11 selon son axe longitudinal indiqué sur la figure 1 par le nombre de référence 110, sensiblement plus grande que les deux autres dimensions.

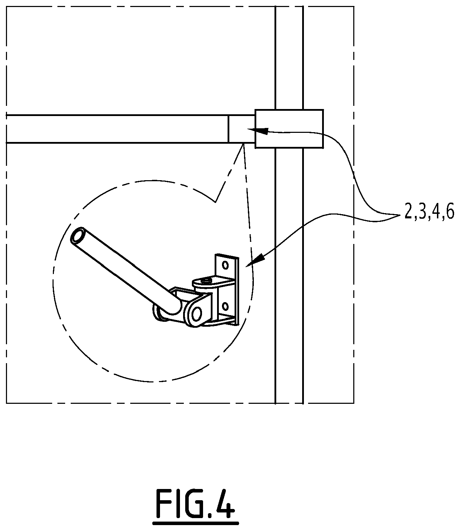

En particulier, le ou chaque premier moyen de connexion 3 comporte une articulation, dont un exemple de réalisation possible est illustré sur la figure 4.

En particulier, cette articulation est positionnée entre et est reliée à la deuxième extrémité 32 de la deuxième barre longitudinale 12 correspondante et à la deuxième extrémité 23 de la troisième barre longitudinale 13 correspondante, et permet la rotation autour de l'axe de l'articulation de chaque troisième barre longitudinale 13 par rapport à chaque deuxième barre longitudinale 12 correspondante.

En outre, la structure mécanique de support 100 comporte des deuxièmes moyens de connexion 2 configurés pour relier la deuxième extrémité 22 de la ou de chaque deuxième barre longitudinale 12 à la première extrémité 21 de la ou de chaque première barre longitudinale 11 correspondante.

De cette manière la deuxième extrémité 22 de la ou de chaque deuxième barre longitudinale 12 est fixe le long de la barre longitudinale correspondante 11, avec la ou chaque deuxième barre longitudinale 12 qui peut basculer par rapport à cette barre longitudinale 11 correspondante.

En particulier, chaque deuxième moyen de connexion 2 comporte une articulation, dont un exemple de réalisation possible est illustré sur la figure 4, qui est reliée à la deuxième extrémité 22 de la deuxième barre longitudinale 12 correspondante et à la première extrémité 21 de la première barre longitudinale 11 correspondante.

Selon une possible forme de réalisation, la structure mécanique de support 100 comporte en outre des troisièmes moyens de connexion 4 configurés pour relier la deuxième extrémité 33 de la ou chaque troisième barre longitudinale 13 à la ou à chaque première barre longitudinale 11 correspondante, de manière mobile l'une par rapport à l'autre.

En particulier, chaque troisième moyen de connexion 4 comporte une articulation, dont un exemple de réalisation possible est illustré également sur la figure 4, qui est reliée à la deuxième extrémité 33 de la troisième barre longitudinale 13 correspondante et à la première barre longitudinale 11 correspondante.

Comme illustré sur les figures 1 et 2, la structure mécanique de support 100 comprend en outre au moins une quatrième barre longitudinale 19 configurée pour relier deux premiers moyens de connexion 3 placés l'un à la suite de l'autre le long de l'axe transversal 10.

Selon une forme de réalisation possible, la structure mécanique de support 100 comprend une pluralité de quatrièmes barres longitudinales 19, chaque quatrième barre longitudinale 19 étant configurée pour relier deux premiers moyens de connexions 3 placés l'un à la suite de l'autre le long le long de l'axe transversal 10.

En particulier, la partie fixe 106 de la structure de support 100 comporte au moins la ou les premières barres longitudinales 11 qui sont installées dans le véhicule 1 à distance l'une de l'autre le long de l'axe transversal 10, par exemple en position substantiellement verticale, et qui ont par exemple la forme d'une piste. La partie mobile 106 comporte au moins la ou les deuxièmes barres longitudinales 12, la ou les troisièmes barres longitudinales 13, la ou les quatrièmes barres longitudinales 19, et les moyens de connexion 2, 3, 4

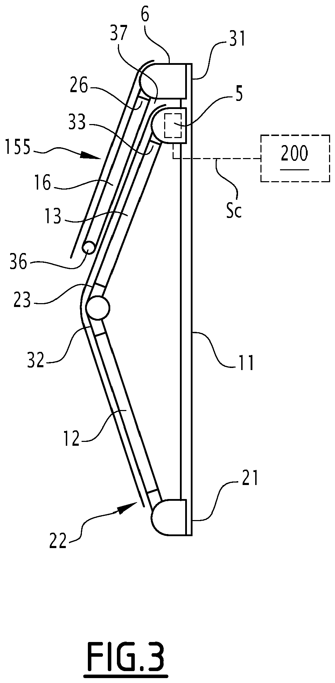

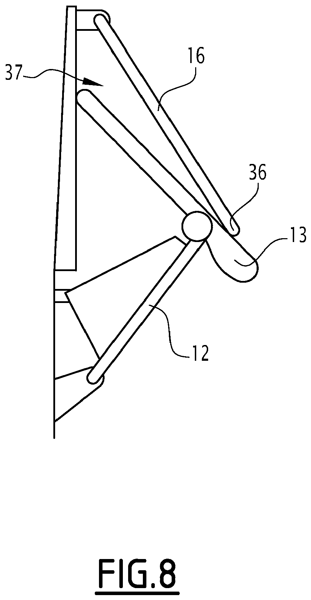

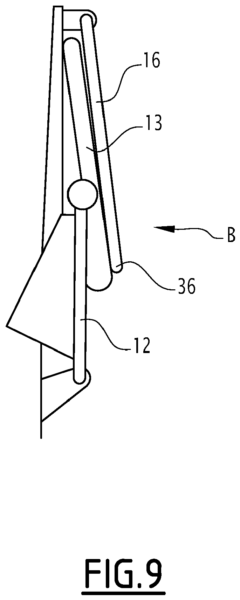

Selon une possible forme de réalisation, comme illustré sur les figures 3 et 7 à 9, la structure mécanique de support 100 comporte en outre au moins une cinquième barre longitudinale 16 et des quatrièmes moyens de connexion 6 qui sont configurés pour relier une première extrémité 26 de la cinquième barre longitudinale 6 à la première barre longitudinale 11, à proximité de la deuxième extrémité 31 de cette première barre longitudinale 11.

De préférence, la structure mécanique de support 100 comporte une pluralité de cinquièmes barres longitudinales 16, c'est à dire au moins deux barres longitudinales 16, et une pluralité de quatrièmes moyens de connexion 6 qui sont configurés pour relier une première extrémité 26 de chaque cinquième barre longitudinale 6 à une première barre longitudinale 11 correspondante, à proximité de la deuxième extrémité 31 de cette première barre longitudinale 11 correspondante.

En particulier, un espace libre 37 est formé entre la ou chaque cinquième barre longitudinale 16 et la ou chaque première barre longitudinale 11 pour accueillir au moins une portion de la partie mobile 105 lorsque la partie mobile 105 est dans la seconde position B.

Selon une possible forme de réalisation, les quatrièmes moyens de connexion 6 sont configurés pour permettre une rotation de chaque cinquième barre longitudinale 16 autour de l'axe transversal 10 par rapport à la première barre longitudinale 11 correspondante.

En particulier chaque quatrième moyen de connexion 6 comporte une articulation reliée à la première extrémité 26 de la cinquième barre longitudinale 16 correspondante et à la première barre longitudinale 11 correspondante. Un exemple de réalisation de chaque moyen de connexion est illustré sur la figure 4.

Selon la forme de réalisation illustrée sur la figure 3, chaque cinquième barre longitudinale 16 est reliée à une première barre longitudinale correspondante 11, sa deuxième extrémité 36 étant libre et suspendue en l'air. En outre, au moins une surface de revêtement additionnelle 155 est disposée sur et est reliée à au moins deux des cinquièmes barres longitudinales 16, et est configurée pour former au moins un dossier pour les passagers.

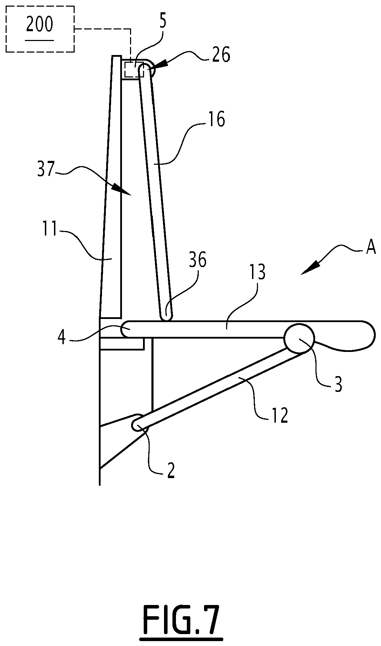

Selon la forme de réalisation illustrée sur les figures 7 à 11, chaque cinquième barre longitudinale 16 est agencée de manière que sa deuxième extrémité 36 est prévue en appui sur un corps de la troisième barre longitudinale 13 correspondante lorsque la partie mobile 105 est dans la première position A, et est prévue pour glisser sur le corps de et relativement à la troisième barre longitudinale 13 correspondant lorsque la partie mobile 105 est déplacée entre la première position A et la seconde position B, comme illustré par les positions illustrées en séquence sur les figures de 7 à 9.

Dans cette forme de réalisation, une surface de revêtement additionnelle 155 est également disposée sur et est reliée à au moins deux des cinquièmes barres longitudinales 16, et est configurée pour former au moins un dossier pour les passagers, comme illustré sur la figure 10 où la partie mobile de la structure 100 est dans la première position A formant des places assises, et dans la figure 11 où la structure 100 est dans la seconde position B.

Selon une forme de réalisation possible du véhicule 1 selon l'invention, le système de gestion de l'espace comporte au moins un dispositif de commande 200, représenté schématiquement sur les figures 1, 3 et 7 sous forme d'une boîte dessinée en traits pointillés, qui est configuré pour générer au moins un signal de commande S_{c} à distance adapté à activer la modification du nombre de places assises disponibles pour les passagers, et en particulier pour activer, de préférence substantiellement en temps réel, le déplacement de la partie mobile 105 par rapport à la partie fixe 106.

De préférence, le dispositif de commande 200 est configuré pour générer le signal de commande S_{c} à distance par rapport à la position des places assises à modifier, c'est-à-dire loin des places assises, et en particulier là où les passagers ne peuvent pas l'activer.

De préférence, le dispositif de commande 200 est installé à bord du véhicule 1, par exemple dans le poste ou la cabine de pilotage du véhicule 1, ou dans toute position inaccessible aux passagers, et est configuré pour activer la modification du nombre des places assises disponibles pour les passagers, substantiellement en temps réel pendant le déplacement du véhicule 1, en particulier selon les conditions effectives du trafic passagers.

Par exemple, un opérateur à bord du véhicule 1 peut activer la modification du nombre des places assises disponibles pour les passagers sur la base de sa vue directe ou en fonction d'images fournies par des caméras vidéo. Ces caméras vidéo peuvent être montées par exemple dans l'espace destiné à accueillir les passagers et/ou sur les quais des gares, et peuvent surveiller la densité effective des passagers à transporter.

En outre, le système de gestion utilisé dans le véhicule 1 selon l'invention comporte des moyens d'actionnement représenté schématiquement sur les figures 1, 3 et 7 sous forme d'une boîte en traits pointillés 5, qui sont configurés pour déplacer la ou chaque partie mobile 105 entre la première position A et la seconde position B, en fonction du signal de command S_{c} reçu et qui a été émis par le dispositif de commande 200.

En particulier, les moyens d'actionnement 5 comportent au moins un moteur commandé à distance par le dispositif de commande 200.

Selon une forme possible de réalisation, le ou chaque moteur commandé à distance est un moteur linéaire qui est monté sur une première barre longitudinale 11 et qui coulisse, le long du corps de cette première barre longitudinale 11, en se déplaçant de façon substantiellement solidaire avec la troisième barre longitudinale 13 et la deuxième barre longitudinale 12 correspondantes.

De préférence, les moyens d'actionnement 5 comportent plusieurs moteurs commandés à distance, notamment deux ou plus moteurs linéaires, chaque moteur étant monté sur une première barre longitudinale 11 correspondante et coulissant, le long du corps de cette première barre longitudinale 11 correspondante, en se déplaçant de façon substantiellement solidaire avec la troisième barre longitudinale 13 et la deuxième barre longitudinale 12 associées à cette première barre longitudinale 11.

Il ressort clairement de la description qui précède que le véhicule 1 de transport de passagers 1 permet d'atteindre le but à la base de la présente invention car l'espace disponible à l'intérieur du véhicule peut être géré plus efficacement par rapport aux solutions connues. En effet, dans le véhicule 1 selon l'invention, l'espace à l'intérieur du véhicule est exploité de façon optimisée soit pendant les heure creuses soit pendant les heures de pointe du service. En particulier, la configuration interne du véhicule peut être adaptée au trafic en temps réel : lorsque le trafic passagers est fluide, le nombre de places assises disponibles est augmenté ; au contraire, lorsque le trafic est plus dense, ces places assises, individuelles ou regroupées par exemple sous forme de banquettes, sont escamotées en libérant tout l'espace d'encombrement de sorte à permettre au plus grand nombre de passagers de disposer d'espace debout. Dans cette configuration, le gain de capacité est optimal.

Ces résultats sont obtenus avec une solution relativement simple du point de vue constructif et très flexible à appliquer.

Le véhicule 1 ainsi conçu est susceptible de modifications et de variations. Par exemple, les surfaces de revêtement déplaçables qui forment les places assises disponibles et/ou l'appui ischiatique, peuvent avoir la forme d'une banquette coulissante comprenant une pluralité de places assises ou sièges, placés côté à côté, comme illustré sur les figures 5 à 6 et 10 à 11, ou elles peuvent former des places assises ou des appuis ischiatiques individuels. Il est possible de réaliser une combinaison avec des sièges ou places assises en forme de banquettes ou similaires, et des places assises ou sièges individuels. En outre, les places assises déplaçables peuvent être positionnées le long du couloir central du véhicule 1 et/ou le long des côtés ; le dispositif de commande 200 peut être configuré pour déplacer sélectivement un certain nombre de places assises déplaçables et pas toutes en même temps ; les barres utilisées peuvent avoir une forme différente par rapport aux formes illustrées sur les figures ; la position de connexion, par exemple de chaque deuxième barre longitudinale 12 le long du corps d'une première barre longitudinale 11 correspondante, peut être différente ; chaque cinquième barre longitudinale 16 peut être reliée à une première barre longitudinale 11 de manière fixe.

Tous les aménagements peuvent en outre être remplacés par des éléments techniquement équivalents.

## Revendications

1. Véhicule (1) de transport de passagers, comportant un système de gestion de l'espace à l'intérieur du véhicule, qui est configuré pour varier le nombre de places assises disponibles en fonction du niveau de trafic de passagers à transporter, le système de gestion comportant au moins une structure mécanique de support (100) ayant une partie fixe (106) et une partie mobile (105) qui est déplaçable, par rapport à la partie fixe (106), entre une première position (A) dans laquelle la partie mobile est déployée vis-à-vis de la partie fixe de manière que la structure mécanique de support (100) forme au moins une place assise disponible pour les passagers, et une seconde position (B) dans laquelle la partie mobile est rétractée vers la partie fixe de façon que l'au moins une place assise est indisponible pour l'assise, **caractérisé en ce que** la structure mécanique de support (100) comporte au moins une surface de revêtement (150) qui est reliée à et est disposée autour d'au moins une portion de la partie mobile (105), la surface de revêtement (150) et la partie mobile (105) se déplaçant ensemble en étant substantiellement solidaires l'une à l'autre, et dans lequel l'au moins une surface de revêtement (150) comporte au moins une première portion substantiellement rigide (152), une deuxième portion substantiellement rigide (153), et une troisième portion déformable (154) qui est disposée entre les première et deuxième portions substantiellement rigides et qui est reliée à la première portion substantiellement rigide (152) et à la deuxième portion substantiellement rigide (153), la première portion substantiellement rigide (152) formant une surface assise lorsque la partie mobile (105) est dans la première position (A), tandis que les première et deuxième portions (152, 153) substantiellement rigides forment avec la troisième portion déformable (154) une surface d'appui ischiatique lorsque la partie mobile (105) est dans la seconde position (B).

2. Véhicule (1) selon la revendication 1, dans lequel la structure mécanique de support (100) est configurée pour former au moins un appui ischiatique pour les passagers lorsque la partie mobile (105) est dans la seconde position.

3. Véhicule (1) selon une ou plusieurs des revendications 1 à 2, dans lequel la structure mécanique de support (100) comporte au moins :
- une première barre longitudinale (11) qui est installée de manière fixe à l'intérieur du véhicule (1) ;
- une deuxième barre longitudinale (12) ayant une première d'extrémité (22) reliée à la première barre longitudinale (11), à proximité d'une première extrémité (21) de la première barre longitudinale (11) ; et
- une troisième barre longitudinale (13) ayant une première extrémité (33) reliée de manière coulissante à la première barre longitudinale (11) ; et
- des premiers moyens de connexion (3) configurés pour relier une deuxième extrémité (32) de la deuxième barre longitudinale (12) à une deuxième extrémité (23) de la troisième barre longitudinale (13), de manière mobile l'une par rapporte à l'autre.

4. Véhicule (1) selon la revendication 3, dans lequel la structure mécanique de support (100) comporte des deuxièmes moyens de connexion (2) configurés pour relier la deuxième extrémité (22) de la ou de chaque deuxième barre longitudinale (12) à la ou chaque première barre longitudinale (11) correspondante, de manière que cette deuxième extrémité (22) est fixe le long de la première barre longitudinale correspondante (11) alors que la ou chaque deuxième barre longitudinale (12) peut basculer par rapport à la première barre longitudinale (11) correspondante.

5. Véhicule (1) selon une ou plusieurs des revendications 1 à 4, dans lequel le système de gestion comporte en outre un dispositif de commande (200) installé à bord du véhicule (1) et configuré pour fournir au moins un signal de commande (S_{c}) à distance pour activer, de préférence substantiellement en temps réel, le déplacement de la partie mobile (105) par rapport à la partie fixe (106).

6. Véhicule (1) selon la revendication 5, dans lequel le système de gestion comporte des moyens d'actionnement (5) qui sont configurés pour déplacer l'au moins une partie mobile (105) entre la première position (A) et la seconde position (B) en fonction d'un signal de command (S_{c}) émis à distance par le dispositif de commande (200).

7. Véhicule (1) selon la revendication 6, dans lequel les moyens d'actionnement (5) comportent au moins un moteur commandé à distance.

8. Véhicule (1) selon la revendication 6 ou 7 prise en combinaison avec la revendication 3, dans lequel l'au moins un moteur commandé à distance est un moteur linéaire monté coulissant sur la première barre longitudinale (11), en étant substantiellement solidaire avec la troisième barre longitudinale (13) correspondante.

## Patentansprüche

1. Fahrzeug (1) zur Beförderung von Passagieren mit einem System zur Verwaltung des Raums im Inneren des Fahrzeugs, das derart ausgelegt ist, dass es die Anzahl der verfügbaren Sitzplätze in Abhängigkeit vom Verkehrsaufkommen der zu befördernden Passagiere variiert, wobei das Verwaltungssystem mindestens eine mechanische Stützstruktur (100) mit einem festen Teil (106) und einem beweglichen Teil (105) aufweist, der in Bezug auf den festen Teil (106) zwischen einer ersten Position (A), in der der bewegliche Teil gegenüber dem festen Teil derart ausgeklappt ist, dass die die mechanische Stützstruktur (100) mindestens einen Sitzplatz bildet, der den Passagieren zu Verfügung steht, und einer zweiten Position (B), in der der bewegliche Teil zum festen Teil derart eingeklappt ist, dass der mindestens eine Sitzplatz nicht zum Sitzen zur Verfügung steht, bewegbar ist, **dadurch gekennzeichnet, dass** die mechanische Stützstruktur (100) mindestens eine Verkleidungsfläche (150) aufweist, die mit mindestens einem Abschnitt des beweglichen Teils (105) verbunden und um diesen herum angeordnet ist, wobei sich die Verkleidungsfläche (150) und der bewegliche Teil (105) gemeinsam bewegen, indem sie substantiell fest miteinander verbunden sind, und wobei die mindestens eine Verkleidungsfläche (150) mindestens einen ersten substantiell starren Abschnitt (152), einen zweiten substantiell starren Abschnitt (153) und einen dritten verformbaren Abschnitt (154) aufweist, der zwischen dem ersten und dem zweiten substantiell starren Abschnitt angeordnet und der mit dem ersten substantiell starren Abschnitt (152) und mit dem zweiten substantiell starren Abschnitt (153) verbunden ist, wobei der erste substantiell starre Abschnitt (152) eine Sitzfläche bildet, wenn der bewegliche Teil (105) in der ersten Position (A) ist, während der erste und der zweite substantiell starre Abschnitt (152, 153) gemeinsam mit dem verformbaren dritten Abschnitt (154) eine ischiatische Stützfläche bilden, wenn der bewegliche Teil (105) in der zweiten Position (B) ist.

2. Fahrzeug (1) nach Anspruch 1, wobei die mechanische Stützstruktur (100) dazu ausgelegt ist, dass sie mindestens eine ischiatische Stütze für die Passagiere bildet, wenn der bewegliche Teil (105) in der zweiten Position ist.

3. Fahrzeug (1) nach einem oder mehreren der Ansprüche 1 bis 2, wobei die mechanische Stützstruktur (100) mindestens umfasst:
- eine erste Längsstange (11), die im Inneren des Fahrzeugs (1) fest installiert ist;
- eine zweite Längsstange (12) mit einem ersten Ende (22), das mit der ersten Längsstange (11) in der Nähe eines ersten Endes (21) der ersten Längsstange (11) verbunden ist; und
- eine dritte Längsstange (13) mit einem ersten Ende (33), das mit der ersten Längsstange (11) gleitend verbunden ist; und
- erste Verbindungsmittel (3), die dazu ausgelegt sind, dass sie ein zweites Ende (32) der zweiten Längsstange (12) mit einem zweiten Ende (23) der dritten Längsstange (13) im Verhältnis zueinander beweglich verbinden.

4. Fahrzeug (1) nach Anspruch 3, wobei die mechanische Stützstruktur (100) zweite Verbindungsmittel (2) aufweist, die dazu ausgelegt sind, dass sie das zweite Ende (22) der oder jeder zweiten Längsstange (12) mit der oder jeder entsprechenden ersten Längsstange (11) verbinden, so dass dieses zweite Ende (22) entlang der entsprechenden ersten Längsstange (11) fest ist, während die oder jede zweite Längsstange (12) im Verhältnis zu der entsprechenden ersten Längsstange (11) kippen kann.

5. Fahrzeug (1) nach einem oder mehreren der Ansprüche 1 bis 4, wobei das Verwaltungssystem ferner eine Steuervorrichtung (200) umfasst, die an Bord des Fahrzeugs (1) installiert und dazu ausgelegt ist, mindestens ein Fernsteuersignal (S_{c}) bereitzustellen, um die Bewegung des beweglichen Teils (105) im Verhältnis zum festen Teil (106) vorzugsweise substantiell in Echtzeit zu aktivieren.

6. Fahrzeug (1) nach Anspruch 5, wobei das Verwaltungssystem Betätigungsmittel (5) umfasst, die dazu ausgelegt sind, den mindestens einen beweglichen Teil (105) in Abhängigkeit von einem Steuersignal (S_{c}), das von der Steuervorrichtung (200) ferngesteuert gesendet wird, zwischen der ersten Position (A) und der zweiten Position (B) zu bewegen.

7. Fahrzeug (1) nach Anspruch 6, wobei die Betätigungsmittel (5) mindestens einen ferngesteuerten Motor umfassen.

8. Fahrzeug (1) nach Anspruch 6 oder 7 in Kombination mit Anspruch 3, wobei der mindestens eine ferngesteuerte Motor ein Linearmotor ist, der auf der ersten Längsstange (11) gleitend angebracht ist, indem er mit der entsprechenden dritten Längsstange (13) substantiell fest verbunden ist.

## Claims

1. A passenger transport vehicle (1) comprising a system for managing the space inside the vehicle which is configured to vary the number of available seating places in accordance with the level of passenger traffic to be transported, the management system comprising at least one mechanical support structure (100) having a fixed part (106) and a movable part (105) which is movable, relative to the fixed part (106), between a first position (A) in which the movable part is extended relative to the fixed part so that the mechanical support structure (100) forms at least one available seating place for passengers, and a second position (B) in which the movable part is retracted towards the fixed part so that the at least one seating place is unavailable for seating, **characterized in that** the mechanical support structure (100) comprises at least one covering surface (150) which is connected to and is disposed around at least a portion of the movable part (105), the covering surface (150) and the movable part (105) moving together substantially solidary with each other, and wherein the at least one covering surface (150) comprises at least a first substantially rigid portion (152), a second substantially rigid portion (153), and a third deformable portion (154) which is disposed between the first and second substantially rigid portions and which is connected to the first substantially rigid portion (152) and the second substantially rigid portion (153), the first substantially rigid portion (152) forming a seating surface when the movable part (105) is in the first position (A), while the first and second substantially rigid portions (152, 153) form with the third deformable portion (154) an ischiatic support surface when the movable part (105) is in the second position (B).

2. Vehicle (1) according to claim 1, wherein the mechanical support structure (100) is configured to form at least one ischiatic support for the passengers when the movable part (105) is in the second position.

3. Vehicle (1) according to one or more of claims 1 to 2, wherein the mechanical support structure (100) comprises at least:
- a first longitudinal bar (11) which is fixedly installed inside the vehicle (1);
- a second longitudinal bar (12) having a first end (22) connected to the first longitudinal bar (11), in proximity to a first end (21) of the first longitudinal bar (11); and
- a third longitudinal bar (13) having a first end (33) slidably connected to the first longitudinal bar (11); and
- first connection means (3) configured to connect a second end (32) of the second longitudinal bar (12) to a second end (23) of the third longitudinal bar (13) in a movable manner one with respect to the other.

4. Vehicle (1) according to claim 3, wherein the mechanical support structure (100) comprises second connection means (2) configured to connect the second end (22) of the or each second longitudinal bar (12) to the or each corresponding first longitudinal bar (11), such that said second end (22) is fixed along the corresponding first longitudinal bar (11) while the or each second longitudinal bar (12) is tiltable relative to the corresponding first longitudinal bar (11).

5. Vehicle (1) according to one or more of claims 1 to 4, wherein the management system further comprises a control device (200) installed on board the vehicle (1) and configured to provide at least one remote control signal (S_{c}) for activating, preferably substantially in real time, the displacement of the movable part (105) relative to the fixed part (106).

6. Vehicle (1) according to claim 5, wherein the management system comprises actuation means (5) which are configured to move the at least one movable part (105) between the first position (A) and the second position (B) as a function of a control signal (S_{c}) emitted remotely by the control device (200).

7. Vehicle (1) as claimed in claim 6, wherein the actuation means (5) comprises at least one remotely controlled motor.

8. Vehicle (1) according to claim 6 or 7 taken in combination with claim 3, wherein the at least one remotely controlled motor is a linear motor slidably mounted on the first longitudinal bar (11), being substantially solidary with the corresponding third longitudinal bar (13).
